# EUROPEAN PATENT APPLICATION

(11) **EP 4 832 290 A1**
(43) Date of publication of application: **28.10.2026**
(21) Application number: 24905743.1
(22) Date of filing: 30.09.2024
(51) Int. Cl.: H02J 3/16

(54) **NEW ENERGY POWER GENERATION SYSTEM AND CONVERTER CONTROL METHOD THEREFOR, AND CONVERTER CONTROLLER**

(30) Priority: 18.12.2023 CN 202311750213; 18.12.2023 CN 202311749953
(71) Applicant: GOLDWIND SCIENCE & TECHNOLOGY CO., LTD., Xinjiang 830026 (CN)
(72) Inventor: ZHAO, Xiangsheng, Beijing 100176 (CN); LIU, Shijun, Beijing 100176 (CN); SUN, Kangkang, Beijing 100176 (CN); WU, Lei, Beijing 100176 (CN)
(74) Representative: Hoffmann Eitle
(86) International application number: PCT/CN2024/122857
(87) International publication number: WO 2025/130253

(57) **Abstract**

Disclosed in the present disclosure are a new energy power generation system and a converter control method therefor, and a converter controller. The converter control method comprises: acquiring three-phase voltage values of a station-grid connected point in real time and inputting same into a phase-locked loop to obtain a phase-locked angle, and determining a first reference phase angle on the basis of the phase-locked angle; on the basis of the first reference phase angle, performing coordinate transformation on a grid-side inductor current value of a converter to obtain dq-axis positive- and negative-sequence inductor current values, and performing coordinate transformation on the grid-side three-phase voltage value of the converter to obtain dq-axis positive- and negative-sequence grid-side voltage values; and determining dq-axis grid-side voltage reference values on the basis of the dq-axis positive- and negative-sequence inductor current values and the dq-axis positive- and negative-sequence grid-side voltage values.

## Description

The present disclosure claims the priority to Chinese Patent Application No. 202311750213.1, filed on December 18, 2023, titled "REACTIVE POWER CONTROL METHOD AND APPARATUS FOR NEW ENERGY POWER GENERATION SYSTEM", and Chinese Patent Application No. 202311749953.3, filed on December 18, 2023, titled " NEW ENERGY POWER GENERATION SYSTEM AND CONVERTER CONTROL METHOD THEREFOR, AND CONVERTER CONTROLLER", which are incorporated herein by reference in their entireties.

### FIELD

The present disclosure generally relates to the technical field of new energy power generation, and more specifically, to a new energy power generation system and a method for controlling a converter thereof, and a converter controller.

### BACKGROUND

In a new power generation system mainly using new energy, a priority direction of technical research and development lies in improving the proportion of new energy and the grid accommodation capacity and ensuring safe and stable operation of the grid. In recent years, the new energy industry represented by wind power has maintained a trend of rapid growth. However, there are still many technical problems required to be solved and mitigated in the wind power industry, the first of which is the grid connection stability problem.

At present, in wind farms at home and abroad, an idea of "centralized dispatching, decentralized control" is applied. In the so-called centralized dispatching, unified power assignment across wind turbine generator systems (hereinafter also simply referred to as wind turbines) in a wind farm is performed by an upper-level centralized control center. In the decentralized control, each wind turbine uses an independent control unit to realize data acquisition and grid-connection/disconnection control. Each wind turbine is equivalent to an independent individual, so that, under special operating conditions such as low voltage ride-through and high voltage ride-through, the wind turbines interfere with each other, resulting in a poor coordinate effect, and a weak fault ride-through capability. Particularly, under weak grid conditions, wind turbines are at a risk of grid disconnection.

### SUMMARY

Exemplary embodiments of the present disclosure provide a new energy power generation system and a method for controlling a converter thereof, and a converter controller, which can effectively solve the stability problem of the grid-connected operation of the new energy power generation system.

According to a first aspect of the exemplary embodiments of the present disclosure, a method for controlling a converter of a new energy power generation system is provided. The method comprises: acquiring a three-phase voltage value at a point of common coupling (PCC) in real time and inputting the acquired three-phase voltage value into a phase-locked loop to obtain a phase-locked angle, and determining a first reference phase angle based on the phase-locked angle; based on the first reference phase angle: performing coordinate transformation on a grid-side inductor-current value of the converter to obtain a dq-axis positive and negative sequence inductor-current, and performing coordinate transformation on a grid-side three-phase voltage value of the converter to obtain a dq-axis positive and negative sequence grid-side voltage; determining a d-axis grid-side voltage reference value and a q-axis grid-side voltage reference value based on the dq-axis positive and negative sequence inductor-current, and the dq-axis positive and negative sequence grid-side voltage; and generating a pulse width modulation (PWM) signal for controlling a grid-side three-phase power module of the converter based on the d-axis grid-side voltage reference value and the q-axis grid-side voltage reference value as well as the first reference phase angle.

According to a second aspect of the exemplary embodiments of the present disclosure, a computer-readable storage medium storing a computer program is provided. When the computer program is executed by a processor, it causes the processor to perform the method for controlling a converter of a new energy power generation system as described above.

According to a third aspect of the exemplary embodiments of the present disclosure, a converter controller for a new energy power generation system is provided. The converter controller comprises: a processor; and a memory storing a computer program. When the computer program is executed by the processor, it causes the processor to perform the method for controlling a converter of a new energy power generation system as described above.

According to a fourth aspect of the exemplary embodiments of the present disclosure, a new energy power generation system is provided. The new energy power generation system comprises a converter and the converter controller as described above.

The new energy power generation system and the method for controlling a converter thereof, and the converter controller according to the exemplary embodiments of the present disclosure introduce the voltage at the PCC into the converter grid-side control of the new energy power generation system. Here, a flexible grid-connection characteristic of the converter is used to coordinately and intensively control the decentralized new energy power generation systems, so that a new energy power generation system group (for example, a wind turbine group) has the dynamic attributes of synchronous control, synchronous response, and synchronous execution, so as to maximize a group effect and combined outputs of the new energy power generation systems, thereby improving the fault ride-through capability and grid-connection stability of the new energy power generation system. In addition, a reactive power closed-loop control algorithm based on the voltage direction of the PCC is also proposed. Here, a voltage phase-locked angle of PCC directly participates in the synchronous control of the converter current inner loop of each new energy power generation system, enabling the reactive power output directions of the new energy power generation systems within the same new energy farm to be consistent, maximizing the group effect and combined outputs of the new energy power generation systems, thereby realizing the reactive power synchronous control of the new energy farm.

In the following description, some aspects and/or advantages of the general concept of the present disclosure will be set forth, and some aspects and/or advantages will become apparent through the following description or by practice of the general concept of the present disclosure.

### BRIEF DESCRIPTION OF THE DRAWINGS

From the following detailed description of the embodiments of the present application in conjunction with the accompanying drawings, these and/or other aspects and advantages of the present application will become clearer and easier to understand, where,
FIG. 1 shows a flowchart of a method for controlling a converter of a new energy power generation system according to an exemplary embodiment of the present disclosure;
FIG. 2 shows a topological structure schematic diagram of a wind turbine converter according to an exemplary embodiment of the present disclosure;
FIG. 3 shows a timing sequence schematic diagram of a farm point of common coupling and local converter control according to an exemplary embodiment of the present disclosure;
FIG. 4 shows a schematic diagram of a phase-locked loop design and coordinate transformation of voltage and current according to an exemplary embodiment of the present disclosure;
FIG. 5 shows a flowchart of a method for determining a d-axis grid-side voltage reference value and a q-axis grid-side voltage reference value based on a dq-axis positive and negative sequence inductor-current and a dq-axis positive and negative sequence grid-side voltage according to an exemplary embodiment of the present disclosure;
FIG. 6 shows a flowchart of a method for determining a d-axis grid-side voltage reference value and a q-axis grid-side voltage reference value according to an exemplary embodiment of the present disclosure;
FIG. 7 shows a schematic diagram of a voltage outer loop according to an exemplary embodiment of the present disclosure;
FIG. 8 shows a schematic diagram of a reactive power closed loop according to an exemplary embodiment of the present disclosure;
FIG. 9 shows a schematic diagram of a current inner loop according to an exemplary embodiment of the present disclosure;
FIG. 10 shows a low voltage ride-through simulated waveform according to an exemplary embodiment of the present disclosure;
FIG. 11 shows a flowchart of a method for controlling a converter of a new energy power generation system according to another exemplary embodiment of the present disclosure;
FIG. 12 shows a flowchart of a method for determining a reactive power closed-loop feedback amount according to an exemplary embodiment of the present disclosure;
FIG. 13 shows a flowchart of a method for determining a q-axis grid-side voltage reference value according to an exemplary embodiment of the present disclosure;
FIG. 14 shows a flowchart of a method for controlling a converter of a new energy power generation system according to another exemplary embodiment of the present disclosure;
FIG. 15 shows a schematic diagram of farm reactive power control according to an exemplary embodiment of the present disclosure; and
FIG. 16 shows a schematic diagram of a current inner loop according to another exemplary embodiment of the present disclosure.

### DETAILED DESCRIPTION

The embodiments of the present disclosure will be described in detail below. Examples of the embodiments are shown in the accompanying drawings, wherein identical reference numerals always refer to identical components. The embodiments will be described below with reference to the accompanying drawings in order to explain the present disclosure.

It should be noted that terms such as "first" and "second" in the description and claims of the present disclosure and the above drawings are used to distinguish similar objects and are not necessarily used to describe a specific sequence or chronological order. It should be understood that the data used in this way can be interchanged under appropriate circumstances so that the embodiments of the present disclosure described herein can be implemented in sequences other than those illustrated or described herein. The implementation manners described in the following exemplary embodiments do not represent all implementation manners consistent with the present disclosure. On the contrary, they are merely examples of devices and methods consistent with some aspects of the present disclosure as detailed in the appended claims.

It also should be noted that "at least one of several items" appearing in the present disclosure means covering three parallel cases: "any one of the several items," "a combination of any multiple items of the several items," and "all of the several items." For example, "at least one of A and B" includes the following three parallel cases: (1) A; (2) B; (3) A and B. For another example, "at least one of executing step one and step two" represents the following three parallel cases: (1) executing step one; (2) executing step two; (3) executing step one and step two.

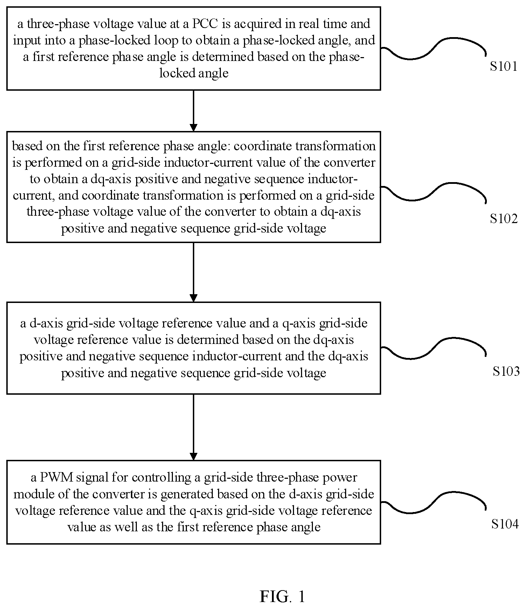

FIG. 1 shows a flowchart of a method for controlling a converter of a new energy power generation system according to an exemplary embodiment of the present disclosure.

As an example, the type of the new energy power generation system may include, but are not limited to: a wind turbine system and/or a photovoltaic power system. It should be understood that the new energy power generation system may also be of other types, which is not limited in the present disclosure. In other words, the application scenarios of the method for controlling a converter of a new energy power generation system according to the exemplary embodiments of the present disclosure are not limited to wind farms, but may also be applied to other types of new energy farm.

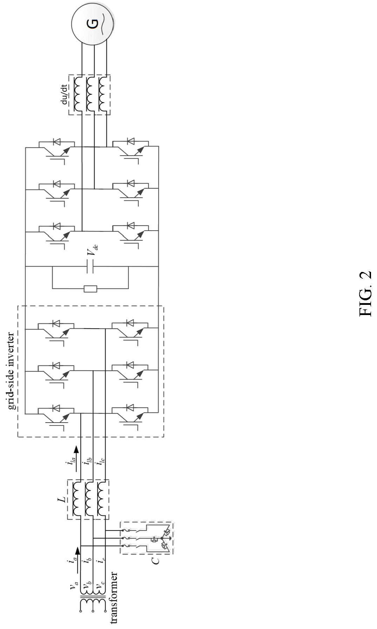

Taking a wind turbine as the new energy power generation system and a back-to-back dual pulse width modulation (PWM) converter as the wind power converter as an example, the topological structure of the wind power converter may be shown in FIG. 2. The wind power converter may include a grid-side inverter and a machine-side rectifier. A direct current (DC) side of the grid-side inverter is connected to a generator of the wind turbine via the machine-side rectifier. An alternate current (AC) side of the grid-side inverter is connected to a low-voltage side of a transformer via a filter (i.e., a grid-side filter), and a high-voltage side of the transformer is connected to a point of common coupling (PCC, i.e., a common connection point where all converter devices in the farm are connected collectively). For example, the grid-side filter may be an inductor-capacitor (LC) filter or an inductor-capacitor-inductor (LCL) filter.

As an example, the method for controlling a converter of a new energy power generation system according to an exemplary embodiment of the present disclosure may be executed by a controller (that is, a converter controller) of the converter of the new energy power generation system.

Referring to FIG. 1, in step S101, a three-phase voltage value at a PCC is acquired in real time and input into a phase-locked loop to obtain a phase-locked angle, and a first reference phase angle is determined based on the phase-locked angle.

As an example, the most recently acquired three-phase voltage value at the PCC may be input into the phase-locked loop (PLL) to obtain the phase-locked angle, and the first reference phase angle is determined based on the phase-locked angle.

Data (including but not limited to the three-phase voltage value at the PCC) collected in real time at the PCC is transmitted through a high-speed communication bus to each new energy power generation system connected to the grid via the PCC within the new energy farm. Accordingly, the step of acquiring the three-phase voltage value at the PCC in real time may include: receiving the three-phase voltage value at the PCC in real time.

As an example, the converter and the PCC have an identical data acquisition time (i.e., a sampling point). In other words, synchronous sampling is performed at the converter and the PCC.

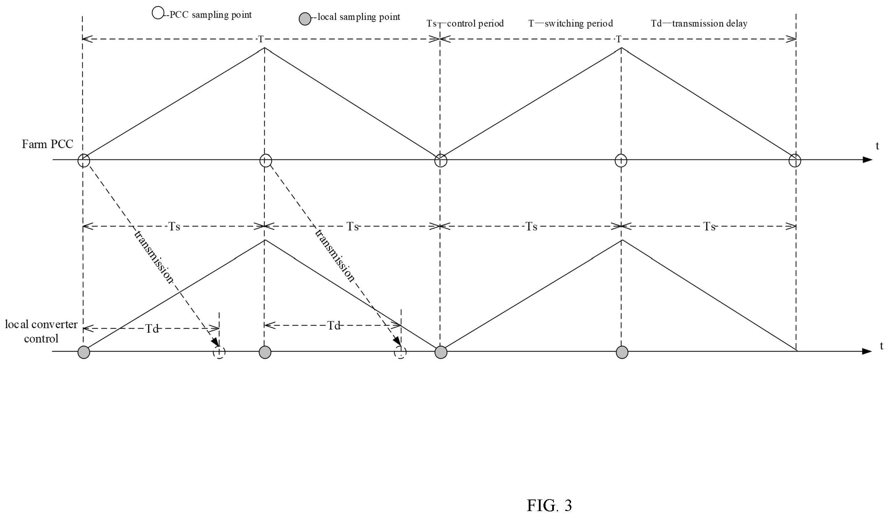

As shown in FIG. 3, as an example, a length of a data synchronous-acquisition period of the converter and the PCC is identical to that of a control period *Tₛ* (i.e., an execution period of the method) of the converter. A length of a switching period *T* of a grid-side three-phase power module is twice the length of the control period *Tₛ* . *T_{d}* represents a communication delay from the PCC to the converter controller (i.e., a transmission delay for the three-phase voltage value of the PCC to be transmitted from the PCC to the converter controller). In an implementation, the transmission delay *T_{d}* is a time deviation between a local reception time and a sampling time of the three-phase voltage value at the PCC. It should be understood that the data synchronous-acquisition period is not limited to being identical to the control period, nor is the transmission delay limited to being less than the length of the control period. For example, it is sufficient that the transmission delay is less than 1ms.

Considering the transmission delay of the three-phase voltage value at PCC and a phase angle difference of the transformer via which the converter connects to the PCC, compensation may be performed on the phase-locked angle to obtain a more accurate first reference phase angle. As an example, the compensation may be performed on the phase-locked angle based on the transmission delay of the three-phase voltage value at the PCC and a phase angle difference between the high-voltage side and the low-voltage side of the transformer, to obtain the first reference phase angle.

As an example, a sum of the phase-locked angle, a first compensation angle for compensating the phase angle difference between the high-voltage side and the low-voltage side of the transformer, and a second compensation angle for compensating the transmission delay of the three-phase voltage value at the PCC may be determined as the first reference phase angle.

For example, the first reference phase angle *θ_{pcc}* may be calculated by the following equation: ${θ}_{pcc} = {θ}_{0} + {δ}_{θ 0} + {δ}_{θ 1} ,$ where *θ*₀ represents the phase-locked angle, *δ*_{*θ*0} represents the first compensation angle, and *δ*_{*θ*1} represents the second compensation angle.

As an example, the first compensation angle may be determined based on the phase angle difference between the high-voltage side and the low-voltage side of the transformer. For example, the phase angle difference between the high-voltage side and the low-voltage side of the transformer relates to a model of the transformer and a connection relationship between the high-voltage side and the low-voltage side of the transformer. For example, the phase angle difference between the high-voltage side and the low-voltage side of the transformer may be 30°.

As an example, the second compensation angle may be determined based on the transmission delay of the three-phase voltage value at the PCC. For example, the transmission delay may relate to a length of a communication line and a communication rate.

In step S102, based on the first reference phase angle: coordinate transformation is performed on a grid-side inductor-current value of the converter to obtain a dq-axis positive and negative sequence inductor-current, and coordinate transformation is performed on a grid-side three-phase voltage value of the converter to obtain a dq-axis positive and negative sequence grid-side voltage.

The grid-side inductor-current value is a value of a current flowing through a filter inductor of the grid-side filter.

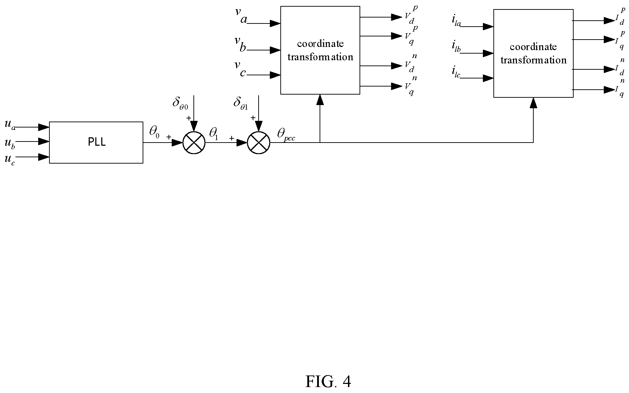

The design of the phase-locked loop and coordinate transformation is shown in FIG. 4. In conjunction with FIG. 3, when coordinate transformation is performed on data (including but not limited to the grid-side inductor-current value and the grid-side three-phase voltage value) collected during a current data synchronous-acquisition period, the three-phase voltage value at the PCC collected during the current data synchronous-acquisition period has not yet been received because of the communication delay. Therefore, the first reference phase angle *θ_{pcc}* as used is a phase angle obtained by performing compensation on a phase-locked angle of a three-phase voltage value *uₐ*, *u_{b}*, *u_{c}* at the PCC collected in a previous data synchronous-acquisition period (i.e., the most recently received).

As an example, the step S102 may include: performing coordinate transformation on the most recently collected grid-side inductor-current *iₗₐ, i_{lb}, i_{lc}* of the converter based on the first reference phase angle, to obtain the dq-axis positive and negative sequence inductor-current ${I}_{d}^{p} , {I}_{q}^{p} , {I}_{d}^{n} , {I}_{q}^{n}$ (i.e., a d-axis positive-sequence component, a q-axis positive-sequence component, a d-axis negative-sequence component, and a q-axis negative-sequence component of a grid-side inductor-current value on a d-axis and a q-axis respectively); performing coordinate transformation on the most recently collected grid-side three-phase voltage *vₐ*, *v_{b}*, *v_{c}* of the converter to obtain the dq-axis positive and negative sequence grid-side voltage ${V}_{q}^{p} , {V}_{q}^{n} , {V}_{d}^{p} , {V}_{d}^{n}$ (i.e., a q-axis positive-sequence component, a q-axis negative-sequence component, a d-axis positive-sequence component, and a d-axis negative-sequence component of a grid-side three-phase voltage value on the d-axis and the q-axis respectively ).

In step S103, a d-axis grid-side voltage reference value and a q-axis grid-side voltage reference value is determined based on the dq-axis positive and negative sequence inductor-current and the dq-axis positive and negative sequence grid-side voltage.

It should be understood that other appropriate methods may be used to determine the d-axis grid-side voltage reference value and the q-axis grid-side voltage reference value, which is not limited in the present disclosure. The step S103 will be described below in conjunction with specific exemplary embodiments and will not be detailed here.

In step S104, a PWM signal for controlling a grid-side three-phase power module of the converter is generated based on the d-axis grid-side voltage reference value and the q-axis grid-side voltage reference value as well as the first reference phase angle.

It should be understood that coordinate transformation is performed by using the first reference phase angle during a process of generating the PWM signal.

As an example, the grid-side inverter of the converter may include multiple three-phase power modules (i.e., grid-side three-phase power modules) with an identical structure. The three-phase power module may also be referred to as a three-level bridge arm, a three-level topology, an insulated gate bipolar transistor (IGBT) module, etc. As an example, each three-phase power module may include multiple switching devices (e.g., IGBTs) and diodes connected in anti-parallel thereto.

As an example, a method for calculating the PWM pulse signal is not limited to space vector pulse width modulation (SVPWM).

According to an exemplary embodiment of the present disclosure, the voltage at the PCC is integrated into a converter-control synchronous algorithm of a new energy power generation system group. Based on a high-speed synchronous control system, the grid-side control operations of respective converters in the new energy power generation system group are consistent, enabling output directions of the new energy power generation systems within the same new energy farm to be identical, thus improving the fault ride-through capability and operational stability of the new energy power generation system under the grid.

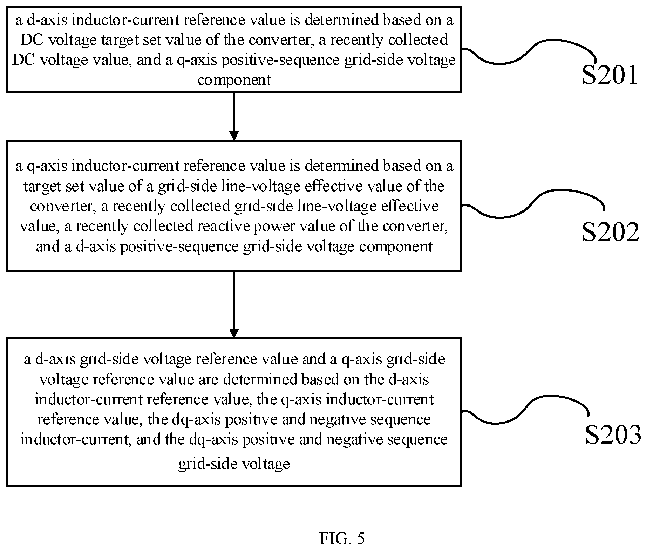

FIG. 5 shows a flowchart of a method for determining a d-axis grid-side voltage reference value and a q-axis grid-side voltage reference value based on a dq-axis positive and negative sequence inductor-current and a dq-axis positive and negative sequence grid-side voltage according to an exemplary embodiment of the present disclosure.

Referring to FIG. 5, in step S201, a d-axis inductor-current reference value is determined based on a DC voltage target set value of the converter, a recently collected DC voltage value, and a q-axis positive-sequence grid-side voltage component.

As an example, a difference between the DC voltage target set value of the converter and the recently collected DC voltage value may be input into a fourth PI controller, and then the d-axis inductor-current reference value may be determined based on an output value of the fourth PI controller, the q-axis positive-sequence grid-side voltage component, a grid-voltage angular frequency, and a grid-side filter capacitance value of the converter.

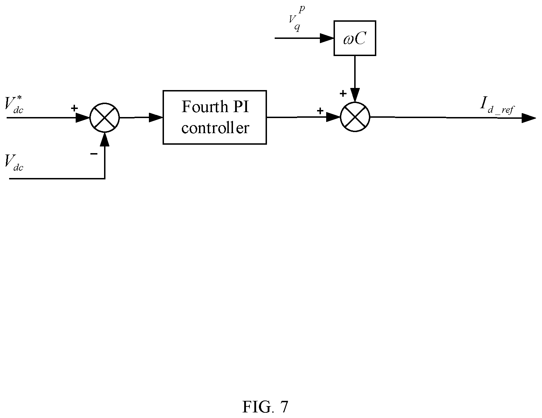

As an example, the d-axis inductor-current reference value may be obtained by the method shown in FIG. 7. Here, ${V}_{dc}^{∗}$ represents the DC voltage target set value, *V_{dc}* represents the recently collected DC voltage value (i.e., the measured DC voltage value), a control deviation is adjusted by the fourth PI controller, and a feedforward amount ${V}_{q}^{p} ∗ ωC$ is added to obtain the d-axis inductor-current reference value *I_{d_ref},* where *ω* represents the grid-voltage angular frequency (for example, it may be 2*π* × 50Hz), and C represents the capacitance value of the filter capacitor in the grid-side filter (i.e., grid-side filter capacitance value).

In step S202, a q-axis inductor-current reference value is determined based on a target set value of a grid-side line-voltage effective value of the converter, a recently collected grid-side line-voltage effective value, a recently collected reactive power value of the converter, and a d-axis positive-sequence grid-side voltage component.

As an example, a difference between the target set value of the grid-side line-voltage effective value of the converter and the recently collected grid-side line-voltage effective value may be input into a second PI controller, and then the q-axis inductor-current reference value may be determined based on an output value of the second PI controller, the recently collected reactive power value of the converter, the d-axis positive-sequence grid-side voltage component, the grid-voltage angular frequency, and the grid-side filter capacitance value of the converter.

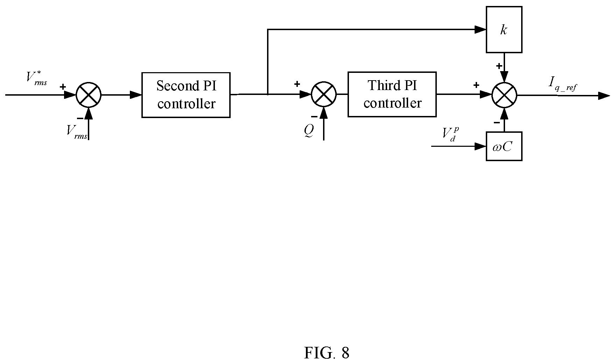

As an example, the q-axis inductor-current reference value may be obtained by the method shown in FIG. 8. Here, ${V}_{rms}^{∗}$ represents the target set value of the grid-side line-voltage effective value, *Vᵣₘₛ* represents the recently collected grid-side line-voltage effective value (i.e., a value obtained by performing calculation on currently-sampled voltage values), a control deviation is adjusted via the second PI controller to obtain a reactive power reference value ${Q}_{cmd}^{′}$, where Q represents the recently collected reactive power value of the converter (i.e., measured reactive power value). Then the q-axis inductor-current reference value *I_{q_ref}* is obtained through PI reactive power closed-loop and feedforward-amount control, where k represents an inertia coefficient.

In step S203, a d-axis grid-side voltage reference value and a q-axis grid-side voltage reference value are determined based on the d-axis inductor-current reference value, the q-axis inductor-current reference value, the dq-axis positive and negative sequence inductor-current, and the dq-axis positive and negative sequence grid-side voltage.

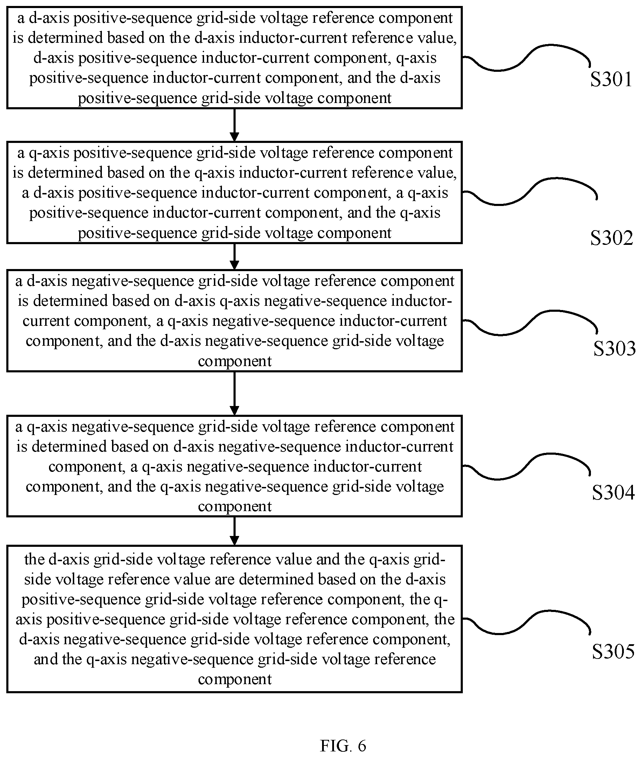

It should be understood that appropriate methods may be used to determine the d-axis grid-side voltage reference value and the q-axis grid-side voltage reference value based on the d-axis inductor-current reference value, the q-axis inductor-current reference value, the dq-axis positive and negative sequence inductor-current, and the dq-axis positive and negative sequence grid-side voltage, and the present disclosure is not limited thereto. An exemplary embodiment of step S203 will be described below in conjunction with FIG. 6 and will not be detailed here.

FIG. 6 shows a flowchart of a method for determining a d-axis grid-side voltage reference value and a q-axis grid-side voltage reference value according to an exemplary embodiment of the present disclosure.

Referring to FIG. 6, in step S301, a d-axis positive-sequence grid-side voltage reference component is determined based on the d-axis inductor-current reference value, d-axis positive-sequence inductor-current component, q-axis positive-sequence inductor-current component, and the d-axis positive-sequence grid-side voltage component.

As an example, a difference between the d-axis inductor-current reference value and a d-axis positive-sequence inductor-current component may be input into a fifth PI controller, and then the d-axis positive-sequence grid-side voltage reference component may be determined based on an output value of the fifth PI controller, a q-axis positive-sequence inductor-current component, the d-axis positive-sequence grid-side voltage component, a grid-side filter inductance value, and the grid-voltage angular frequency.

In step S302, a q-axis positive-sequence grid-side voltage reference component is determined based on the q-axis inductor-current reference value, a d-axis positive-sequence inductor-current component, a q-axis positive-sequence inductor-current component, and the q-axis positive-sequence grid-side voltage component.

As an example, a difference between the q-axis inductor-current reference value and a q-axis positive-sequence inductor-current component may be input into a sixth PI controller, and then the q-axis positive-sequence grid-side voltage reference component may be determined based on an output value of the sixth PI controller, a d-axis positive-sequence inductor-current component, the q-axis positive-sequence grid-side voltage component, the grid-side filter inductance value, and the grid-voltage angular frequency.

In step S303, a d-axis negative-sequence grid-side voltage reference component is determined based on d-axis q-axis negative-sequence inductor-current component, a q-axis negative-sequence inductor-current component, and the d-axis negative-sequence grid-side voltage component.

As an example, a difference between 0 and the d-axis negative-sequence inductor-current component may be input into a seventh PI controller, and then the d-axis negative-sequence grid-side voltage reference component may be determined based on an output value of the seventh PI controller, the q-axis negative-sequence inductor-current component, the d-axis negative-sequence grid-side voltage component, the grid-side filter inductance value, and the grid-voltage angular frequency.

In step S304, a q-axis negative-sequence grid-side voltage reference component is determined based on d-axis negative-sequence inductor-current component, a q-axis negative-sequence inductor-current component, and the q-axis negative-sequence grid-side voltage component.

As an example, a difference between 0 and the q-axis negative-sequence inductor-current component may be input into an eighth PI controller, and then the q-axis negative-sequence grid-side voltage reference component may be determined based on an output value of the eighth PI controller, the d-axis negative-sequence inductor-current component, the q-axis negative-sequence grid-side voltage component, the grid-side filter inductance value, and the grid-voltage angular frequency.

In step S305, the d-axis grid-side voltage reference value and the q-axis grid-side voltage reference value are determined based on the d-axis positive-sequence grid-side voltage reference component, the q-axis positive-sequence grid-side voltage reference component, the d-axis negative-sequence grid-side voltage reference component, and the q-axis negative-sequence grid-side voltage reference component.

As an example, a sum of the d-axis positive-sequence grid-side voltage reference component and the d-axis negative-sequence grid-side voltage reference component may be determined as the d-axis grid-side voltage reference value *V_{d_ref}.*

As an example, a sum of the q-axis positive-sequence grid-side voltage reference component and the q-axis negative-sequence grid-side voltage reference component may be determined as the q-axis grid-side voltage reference value *V_{q_ref}.*

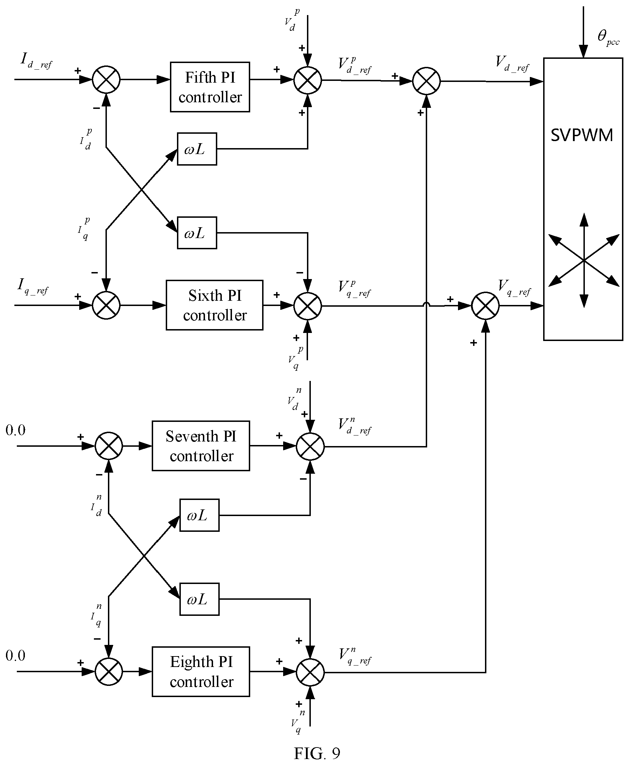

As shown in FIG. 9, positive-sequence control and negative-sequence control are performed independently in the current inner loop design. Here, *L* represents an inductance value of the filter inductor in the grid-side filter (i.e., grid-side filter inductance value). For the positive-sequence control, it is designed that the d-axis positive-sequence grid-side voltage reference component and the q-axis positive-sequence grid-side voltage reference component ${V}_{d _ ref}^{p}$ and ${V}_{q _ ref}^{p}$ are obtained through a PI closed loop and feedforward-amount control, For the negative-sequence control, it is designed that in the current loop, a d-axis target current value and a q-axis target current value are both set to 0, the d-axis negative-sequence grid-side voltage reference component and the q-axis negative-sequence grid-side voltage reference component ${V}_{d _ ref}^{n}$ and ${V}_{q _ ref}^{n}$ are obtained through a PI closed loop and feedforward-amount control and summed with the d-axis and the q-axis positive-sequence grid-side voltage reference component respectively, and then pulses are output by a SVPWM mode.

It should be understood that the voltage outer-loop design, reactive power loop design, and current inner-loop design in the above embodiments may also adopt other designs.

According to an exemplary embodiment of the present disclosure, a farm-level synchronous control method is proposed for a grid-connected side of a converter, where the voltage phase-locked angle at the PCC directly participates in the synchronous control of the inner and outer loops of the converter of each new energy power generation system, enabling the new energy power generation system group to achieve an effect of synchronous control.

According to an exemplary embodiment of the present disclosure, it is possible to solve the grid-connected operation stability problems of the new energy power generation system occurring when the proportion of the new energy grid is high or when the grid is weak, thus effectively increasing the proportion of the new energy grid.

In the method for controlling a converter of a new energy power generation system according to an exemplary embodiment of the present disclosure, the grid connected to the new energy power generation system via the PCC may include a weak grid, a characteristic of which is that a system short-circuit ratio (SCR) is within a predetermined range.

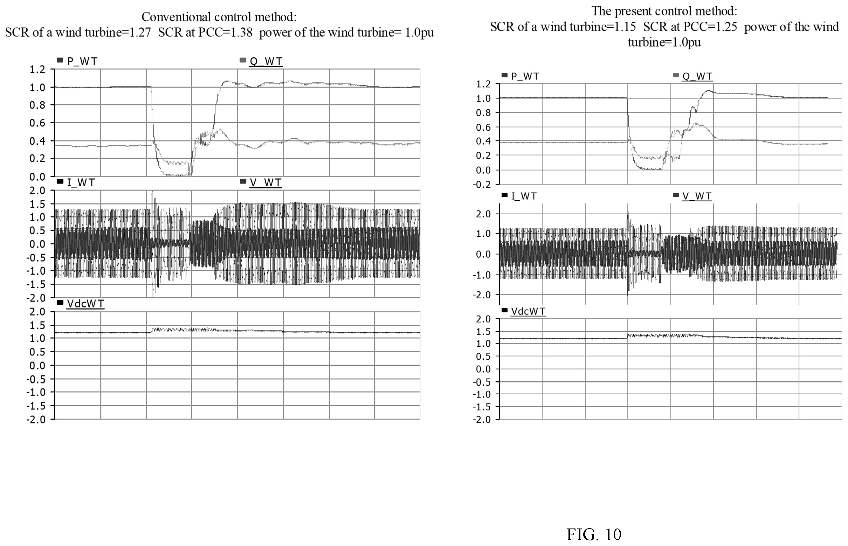

The method for controlling a converter of a new energy power generation system according to an exemplary embodiment of the present disclosure enables the new energy power generation system group to have dynamic attributes of synchronous control, synchronous response, and synchronous execution. FIG. 10 shows a set of Power Systems Computer Aided Design (PSCAD, electromagnetic transient simulation software) simulation data related to the low voltage ride-through capability, where a SCR indicator is the minimum boundary value of SCR under the premise that low voltage ride-through can be achieved. The simulation data indicates that the method for controlling a converter of a new energy power generation system according to the exemplary embodiment of the present disclosure can adapt to lower SCRs, and a fault ride-through capability is significantly enhanced compared with conventional control methods.

Under the same grid conditions, PSCAD and Real Time Data Simulator (RTDS) simulation data indicate that, with the method for controlling a converter of a new energy power generation system according to the exemplary embodiment of the present disclosure, it is expected to increase the proportion of new energy by more than 15% while ensuring stable grid operation.

In addition, with the continuous increase of new energy grid-connected capacity, problems such as grid voltage instability and increased line loss caused by new energy connection to the grid have become increasingly prominent. Power quality has a high impact on grid stability, power device safety operation, and industrial/agricultural production. New energy power generation has a characteristic of randomness (instability) and uncontrollability, and new energy power output has a significant short-cycle change. Changes in new energy power output may cause voltage and frequency fluctuations in a grid system, or even lead to grid system instability. Therefore, reactive power compensation of new energy power generation is of crucial significance for improving grid-connected power quality, reducing grid losses, and enhancing the operational stability and safety of the grid. For example, currently, a mainly used reactive power control in a wind power system is performed based on an Automatic Voltage Control (AVC) system. Here, a reactive power capacity and a regulation capability of a wind turbine are used. If voltage regulation needs of the grid system cannot be satisfied, a reactive power compensation device such as a Static Var Generator (SVG) is required to be additionally installed. However, this method has a shortcoming. The AVC system has a long regulation step size, mostly at a minute or second level, so that it is difficult to satisfy rapid fluctuations of PCC voltage caused by wind turbine randomness and power output changes. Moreover, power output changes of respective wind turbines within the same wind farm are non-synchronous, and reactive power capacities and regulation capabilities of the wind turbines themselves are not fully utilized, relying heavily on additional reactive power compensation devices, thus leading to high reactive power compensation costs.

Therefore, an exemplary embodiment of the present disclosure further provides a method for controlling a converter of a new energy power generation system, which can effectively solve the problem of non-synchronous reactive power modulation caused by power output changes of new energy power generation systems within the same new energy farm.

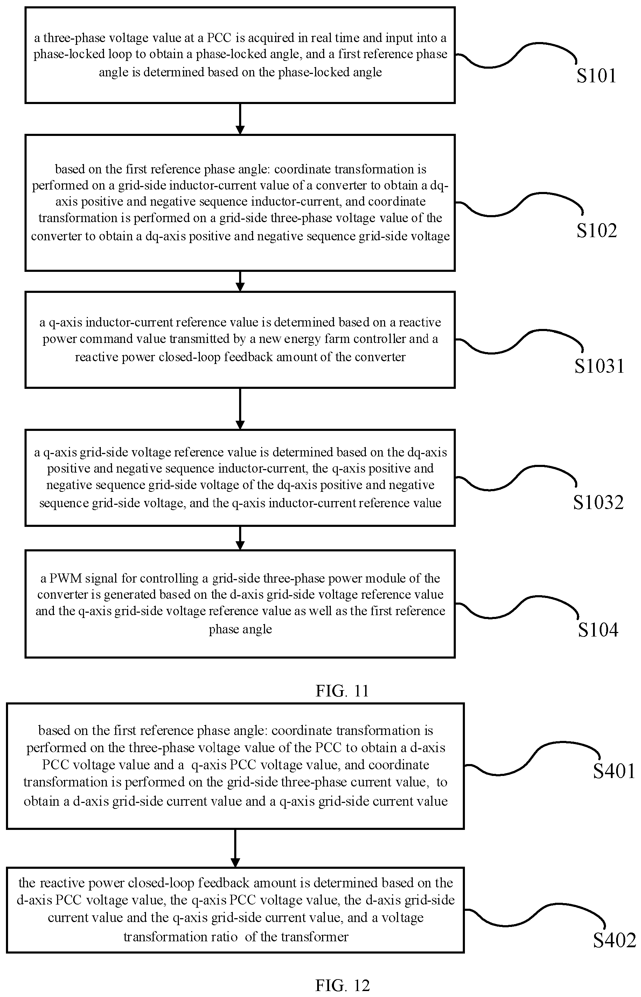

FIG. 11 shows a flowchart of a method for controlling a converter of a new energy power generation system according to an exemplary embodiment of the present disclosure. FIG. 11 shows the method controlling a converter in a farm reactive power synchronous control mode. As shown in FIG. 11, step S103 in FIG. 1 may specifically include step S1031 and step S1032.

Referring to FIG. 11, in step S101, a three-phase voltage value at a PCC is acquired in real time and input into a phase-locked loop to obtain a phase-locked angle, and a first reference phase angle is determined based on the phase-locked angle.

In step S102, based on the first reference phase angle: coordinate transformation is performed on a grid-side inductor-current value of a converter to obtain a dq-axis positive and negative sequence inductor-current, and coordinate transformation is performed on a grid-side three-phase voltage value of the converter to obtain a dq-axis positive and negative sequence grid-side voltage.

In step S1031, a q-axis inductor-current reference value is determined based on a reactive power command value transmitted by a new energy farm controller and a reactive power closed-loop feedback amount of the converter.

As an example, the method for controlling a converter of a new energy power generation system according to an exemplary embodiment of the present disclosure may further include: based on the three-phase voltage value at the PCC, a grid-side three-phase current value of the converter, and the first reference phase angle, determining the reactive power closed-loop feedback amount *Q_{pcc}* for representing an equivalent reactive power value injected by the converter into the PCC. This reactive power closed-loop feedback amount represents the equivalent reactive power value injected into the PCC, which has a certain compensation effect on the losses of the power supply transformer and transmission line, thereby improving the power supply efficiency.

According to an exemplary embodiment of the present disclosure, a method for calculating reactive power adaptive compensation of a new energy power generation system, i.e., a method for calculating the equivalent reactive power *Q_{pcc}* injected into the PCC.

An exemplary embodiment of the method for determining the reactive power closed-loop feedback amount will be described below in conjunction with FIG. 12 and will not be detailed here.

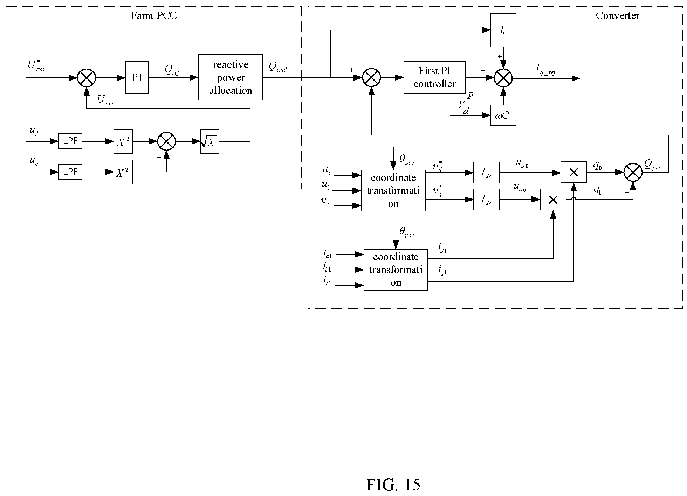

As an example, a total reactive power demand of the new energy farm may be determined based on a target set value of the line-voltage effective value at PCC and a line-voltage effective value at the PCC, and then the total reactive power demand is allocated to determine a reactive power command value of each new energy power generation system in the new energy farm, which is then transmitted. Referring to FIG. 15, ${U}_{rms}^{∗}$ represents the target set value of the line-voltage effective value at the PCC, *Uᵣₘₛ* represents the line-voltage effective value at the PCC, LPF represents a low-pass filter, and a control deviation is adjusted by a PI controller to obtain a reactive power reference set value *Q_{ref},* which is the total reactive power demand of the new energy farm. Then, a hierarchical-principle allocation mechanism may be applied to transmit a corresponding reactive power command *Q_{cmd}* to each new energy power generation system. As an example, the allocation mechanism may include but is not limited to an equal power factor allocation mechanism. It should be understood that other appropriate allocation mechanisms may also be used, which is not limited in the present disclosure.

As an example, for each new energy power generation system, a difference between the reactive power command value *Q_{cmd}* and the reactive power closed-loop feedback amount *Q_{pcc}* may be input into a first PI controller; and then the q-axis inductor-current reference value *I_{q_ref}* is determined based on a d-axis positive-sequence grid-side voltage component ${V}_{d}^{p}$*,* an output value of the first PI controller, the grid-voltage angular frequency, and a grid-side filter capacitance value of the converter.

As an example, for each new energy power generation system, the q-axis inductor-current reference value *I_{q_ref}* may be obtained by the method shown in FIG. 15, where *ω* represents the grid-voltage angular frequency (for example, it may be 2*π* × 50Hz), C represents the capacitance value of the filter capacitor in the grid-side filter (i.e., grid-side filter capacitance value), and k represents an inertia coefficient.

In step S1032, a q-axis grid-side voltage reference value is determined based on the dq-axis positive and negative sequence inductor-current, the q-axis positive and negative sequence grid-side voltage of the dq-axis positive and negative sequence grid-side voltage, and the q-axis inductor-current reference value.

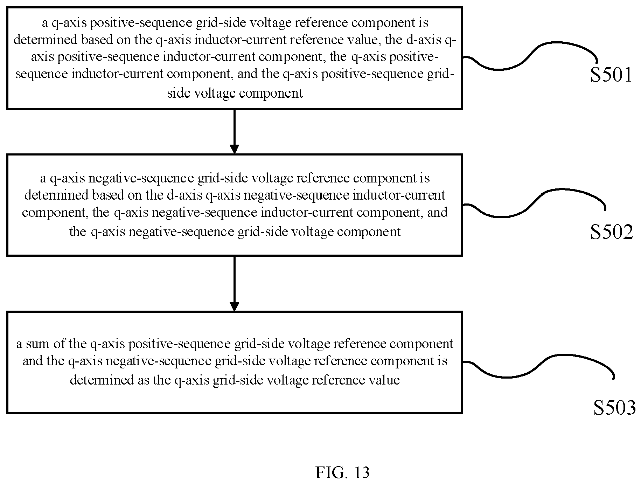

It should be understood that appropriate methods may be used to determine the q-axis grid-side voltage reference value, which is not limited by the present disclosure. An exemplary embodiment of step S1032 will be described below in conjunction with FIG. 13 and will not be detailed here.

In step S104, a PWM signal for controlling a grid-side three-phase power module of the converter is generated based on the d-axis grid-side voltage reference value and the q-axis grid-side voltage reference value as well as the first reference phase angle.

As an example, the d-axis grid-side voltage reference value may be determined by the following method: determining a d-axis inductor-current reference value based on a DC voltage target set value of the converter, a DC voltage value (i.e., measured DC voltage value), and a q-axis positive-sequence grid-side voltage component; and then determining the d-axis grid-side voltage reference value based on the d-axis inductor-current reference value, the d-axis positive and negative sequence grid-side voltage of the dq-axis positive and negative sequence grid-side voltage, and the dq-axis positive and negative sequence inductor-current.

The farm reactive power synchronous control method proposed by the present disclosure can solve the problem of non-synchronous reactive power modulation caused by power output changes of new energy power generation systems (e.g., wind turbines) within the same new energy farm, maximizing the utilization of the reactive power capacity and modulation capability of the new energy power generation systems themselves, and reducing reliance on additional reactive power compensation devices and the resulting costs.

According to an exemplary embodiment of the present disclosure, relying on the communication capability of the high-speed synchronous control system, the response speed and modulation step size can satisfy the randomness and fast power change conditions of the new energy power generation system. The reactive power modulation and response step size can reach a millisecond or even a microsecond level, which has a great significance in improving grid-connected power quality, reducing grid losses, and enhancing grid operational stability and safety.

FIG. 12 shows a flowchart of a method for determining a reactive power closed-loop feedback amount according to an exemplary embodiment of the present disclosure.

Referring to FIG. 12, in step S401, based on the first reference phase angle: coordinate transformation is performed on the three-phase voltage value *uₐ*, *u_{b}*, *u_{c}* of the PCC to obtain a d-axis PCC voltage value and a q-axis PCC voltage value ${u}_{d}^{∗} , {u}_{q}^{∗}$ and coordinate transformation is performed on the grid-side three-phase current value *i*_{*a*1}, *i*_{*b*1}, *i*_{*c*1} to obtain a d-axis grid-side current value and a q-axis grid-side current value *i*_{*d*1}, *i*_{*q*1}.

In step S402, the reactive power closed-loop feedback amount is determined based on the d-axis PCC voltage value, the q-axis PCC voltage value, the d-axis grid-side current value and the q-axis grid-side current value, and a voltage transformation ratio *T_{N}* of the transformer.

As an example, the reactive power closed-loop feedback amount can be obtained by the method shown in FIG. 15. Here, a difference between a product of the d-axis PCC voltage value ${u}_{d}^{∗}$, the q-axis grid-side current value *i*_{*q*1}, and the transformer voltage transformation ratio *T_{N}*, and a product of the q-axis PCC voltage value ${u}_{q}^{∗}$, the d-axis grid-side current value *i*_{*d*1} , and the transformer voltage transformation ratio *T_{N}* is determined as the reactive power closed-loop feedback amount, where the transformer voltage transformation ratio *T_{N}* is a voltage transformation ratio between the low-voltage side and the high-voltage side.

FIG. 13 shows a flowchart of a method for determining a q-axis grid-side voltage reference value according to an exemplary embodiment of the present disclosure.

Referring to FIG. 13, in step S501, a q-axis positive-sequence grid-side voltage reference component is determined based on the q-axis inductor-current reference value, the d-axis q-axis positive-sequence inductor-current component, the q-axis positive-sequence inductor-current component, and the q-axis positive-sequence grid-side voltage component.

As an example, a difference between the q-axis inductor-current reference value and the q-axis positive-sequence inductor-current component ${V}_{q _ ref}^{p}$ may be input into a ninth PI controller, and then the q-axis positive-sequence grid-side voltage reference component is determined based on an output value of the ninth PI controller, the d-axis positive-sequence inductor-current component, the q-axis positive-sequence grid-side voltage component, the grid-side filter inductance value, and the grid-voltage angular frequency.

In step S502, a q-axis negative-sequence grid-side voltage reference component is determined based on the d-axis q-axis negative-sequence inductor-current component, the q-axis negative-sequence inductor-current component, and the q-axis negative-sequence grid-side voltage component.

As an example, a difference between 0 and the q-axis negative-sequence inductor-current component may be input into a tenth PI controller, and then the q-axis negative-sequence grid-side voltage reference component ${V}_{q _ ref}^{n}$ is determined based on an output value of the tenth PI controller, the d-axis negative-sequence inductor-current component, the q-axis negative-sequence grid-side voltage component, the grid-side filter inductance value, and the grid-voltage angular frequency.

In step S503, a sum of the q-axis positive-sequence grid-side voltage reference component and the q-axis negative-sequence grid-side voltage reference component is determined as the q-axis grid-side voltage reference value.

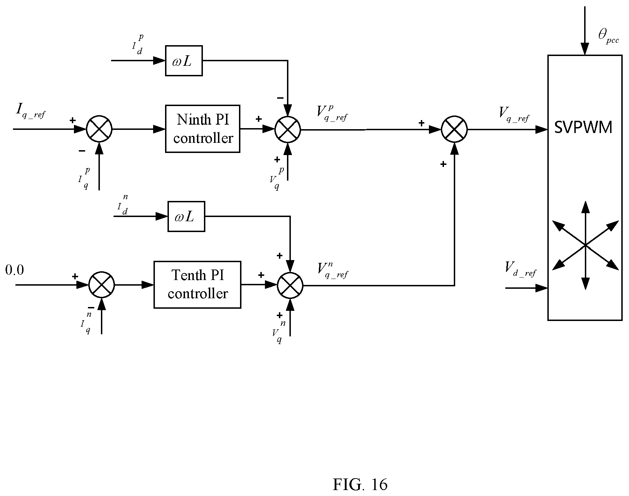

As an example, as shown in FIG. 16, in the current inner loop design, positive-sequence control and negative-sequence control are performed independently. Here, L represents the inductance value of the filter inductor in the grid-side filter (i.e., grid-side filter inductance value). For the positive-sequence control, it is designed that the q-axis positive-sequence grid-side voltage reference component ${V}_{q _ ref}^{p}$ is obtained through a PI closed loop and feedforward-amount control. For the negative-sequence control, it is designed that the current loop q-axis target current value is set to 0, and the q-axis negative-sequence grid-side voltage reference component ${V}_{q _ ref}^{n}$ is obtained through a PI closed loop and feedforward-amount control, which is summed with the q-axis positive-sequence grid-side voltage reference component to obtain the total q-axis reference voltage value *V_{q_ref}.*

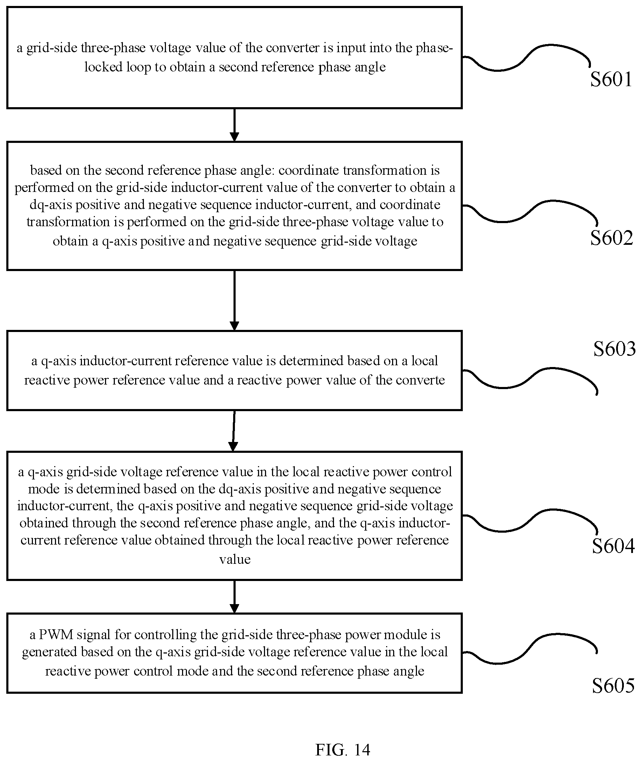

FIG. 14 shows a flowchart of a method for controlling a converter of a new energy power generation system according to another exemplary embodiment of the present disclosure. FIG. 14 shows the method in a case that the farm reactive power synchronous control mode is switched to a local reactive power control mode.

Referring to FIG. 14, in step S601, a grid-side three-phase voltage value of the converter is input into the phase-locked loop to obtain a second reference phase angle.

As an example, the step S601 may include: determining the phase-locked angle obtained by inputting the grid-side three-phase voltage value of the converter into the phase-locked loop as the second reference phase angle.

In step S602, based on the second reference phase angle: coordinate transformation is performed on the grid-side inductor-current value of the converter to obtain a dq-axis positive and negative sequence inductor-current, and coordinate transformation is performed on the grid-side three-phase voltage value to obtain a q-axis positive and negative sequence grid-side voltage.

In step S603, a q-axis inductor-current reference value is determined based on a local reactive power reference value and a reactive power value of the converter.

As an example, the local reactive power reference value may be determined as follows: determining a difference between a target set value ${V}_{rms}^{∗}$ of the grid-side line-voltage effective value of the converter and an actual value *Vᵣₘₛ* of the grid-side line-voltage effective value, and inputting the difference into a second PI controller to obtain the local reactive power reference value.

In step S604, a q-axis grid-side voltage reference value in the local reactive power control mode is determined based on the dq-axis positive and negative sequence inductor-current, the q-axis positive and negative sequence grid-side voltage obtained through the second reference phase angle, and the q-axis inductor-current reference value obtained through the local reactive power reference value.

As an example, a difference between the local reactive power reference value and the reactive power value (i.e., measured reactive power value) of the converter may be input into a third PI controller; and the q-axis inductor-current reference value is determined based on a d-axis positive-sequence grid-side voltage component obtained through the second reference phase angle, an output value of the third PI controller, the grid-voltage angular frequency, and the grid-side filter capacitance value of the converter.

As an example, the q-axis inductor-current reference value in the local reactive power control mode may be determined by the method shown in FIG. 8. Here, ${V}_{rms}^{∗}$ represents the target set value of the grid-side line-voltage effective value, *Vᵣₘₛ* represents the measured calculation value of the grid-side line-voltage effective value, a control deviation is adjusted through the second PI controller to obtain the local reactive power reference value ${Q}_{cmd}^{′}$, and then the q-axis inductor-current reference value *I_{q_ref}* is obtained through reactive power closed-loop PI controller and feedforward-amount control. When exiting the farm synchronous control mode, it smoothly switches from farm reactive power synchronous control to local reactive power control. At this time, a reference phase angle used in the control and calculation process is switched from the first reference phase angle to the second reference phase angle.

As an example, the method for determining the q-axis grid-side voltage reference value in the local reactive power control mode is similar to the method for determining the q-axis grid-side voltage reference value in the farm reactive power synchronous control mode shown in FIG. 11, and will not be detailed here.

In step S605, a PWM signal for controlling the grid-side three-phase power module is generated based on the q-axis grid-side voltage reference value in the local reactive power control mode and the second reference phase angle.

It should be understood that the reactive power loop design and current inner loop design in the above embodiments may also adopt other designs.

According to an exemplary embodiment of the present disclosure, the reactive power control of the converter of each new energy power generation system not only achieves an all-farm synchronous control capability, i.e., an algorithm design based on the PCC voltage direction, but also has a control effect of switching to the local safety mode in response to farm control system anomalies.

According to an exemplary embodiment of the present disclosure, a farm reactive power synchronous control and switching method is provided, solving the problem of non-synchronous reactive power modulation caused by output changes of new energy power generation systems within the same new energy farm, maximizing the utilization of the reactive power capacity and modulation capability of the new energy power generation systems themselves, ensuring that the response speed and modulation step size satisfy the randomness and fast power change conditions of the new energy power generation system, improving grid-connected power quality, enhancing grid operational stability, and reducing reliance on additional reactive power compensation devices and the resulting costs.

An exemplary embodiment of the present disclosure provides a computer-readable storage medium storing a computer program. When the computer program is executed by a processor, it causes the processor to execute the method for controlling a converter of a new energy power generation system described in the exemplary embodiments above. The computer-readable storage medium is any data storage device that can store data readable by a computer system. Examples of the computer-readable storage medium include: Read-Only Memory, Random-Access Memory, CD-ROMs, magnetic tapes, floppy disks, optical data storage devices, and carrier waves (such as data transmission through the Internet via wired or wireless transmission paths).

A converter controller of a new energy power generation system according to an exemplary embodiment of the present disclosure includes: a processor and a memory, wherein the memory stores a computer program. When the computer program is executed by the processor, it causes the processor to execute the method for controlling a converter of a new energy power generation system described in the exemplary embodiments above.

A new energy power generation system according to an exemplary embodiment of the present disclosure includes: a converter and a converter controller described in the exemplary embodiments above.

Although some exemplary embodiments of the present disclosure have been shown and described, those skilled in the art should understand that modifications may be made to these embodiments without departing from the scope and spirit of the present disclosure as defined by the claims and their equivalents.

## Claims

1. A method for controlling a converter of a new energy power generation system, comprising:
acquiring a three-phase voltage value at a point of common coupling (PCC) in real time and inputting the acquired three-phase voltage value into a phase-locked loop to obtain a phase-locked angle, and determining a first reference phase angle based on the phase-locked angle;
based on the first reference phase angle: performing coordinate transformation on a grid-side inductor-current value of the converter to obtain a dq-axis positive and negative sequence inductor-current, and performing coordinate transformation on a grid-side three-phase voltage value of the converter to obtain a dq-axis positive and negative sequence grid-side voltage;
determining a d-axis grid-side voltage reference value and a q-axis grid-side voltage reference value based on the dq-axis positive and negative sequence inductor-current and the dq-axis positive and negative sequence grid-side voltage; and
generating a pulse width modulation (PWM) signal for controlling a grid-side three-phase power module of the converter based on the d-axis grid-side voltage reference value and the q-axis grid-side voltage reference value as well as the first reference phase angle.

2. The method according to claim 1, wherein in a farm reactive power synchronous control mode, the determining a d-axis grid-side voltage reference value and a q-axis grid-side voltage reference value based on the dq-axis positive and negative sequence inductor-current and the dq-axis positive and negative sequence grid-side voltage comprises:
determining a q-axis inductor-current reference value based on a reactive power command value transmitted by a new energy farm controller and a reactive power closed-loop feedback-amount of the converter; and
determining the q-axis grid-side voltage reference value based on the dq-axis positive and negative sequence inductor-current, a q-axis positive and negative sequence grid-side voltage of the dq-axis positive and negative sequence grid-side voltage, and the q-axis inductor-current reference value.

3. The method according to claim 2, further comprising:
determining the reactive power closed-loop feedback amount representing an equivalent reactive power value injected by the converter into the PCC, based on the three-phase voltage value at the PCC, a grid-side three-phase current value of the converter, and the first reference phase angle.

4. The method according to claim 3, wherein the determining the reactive power closed-loop feedback amount representing an equivalent reactive power value injected by the converter into the PCC, based on the three-phase voltage value at the PCC, a grid-side three-phase current value of the converter, and the first reference phase angle comprises:
based on the first reference phase angle: performing coordinate transformation on the three-phase voltage value at the PCC to obtain a d-axis PCC voltage value and a q-axis PCC voltage value, and performing coordinate transformation on the grid-side three-phase current value to obtain a d-axis grid-side current value and a q-axis grid-side current value; and
determining the reactive power closed-loop feedback amount based on the d-axis PCC voltage value and the q-axis PCC voltage value, the d-axis grid-side current value and the q-axis grid-side current value, and a voltage transformation ratio of a transformer,
wherein the converter is connected to the PCC via the transformer.

5. The method according to claim 3 or 4, wherein the determining a q-axis inductor-current reference value based on a reactive power command value transmitted by the new energy farm controller and a reactive power closed-loop feedback-amount of the converter comprises:
inputting a difference between the reactive power command value and the reactive power closed-loop feedback amount into a first PI controller; and
determining the q-axis inductor-current reference value based on a d-axis positive-sequence grid-side voltage component, an output value of the first PI controller, a grid-voltage angular frequency, and a grid-side filter capacitance value of the converter.

6. The method according to claim 2, wherein the determining the q-axis grid-side voltage reference value based on the dq-axis positive and negative sequence inductor-current, a q-axis positive and negative sequence grid-side voltage of the dq-axis positive and negative sequence grid-side voltage, and the q-axis inductor-current reference value comprises:
determining a q-axis positive-sequence grid-side voltage reference component based on the q-axis inductor-current reference value, a d-axis positive-sequence inductor-current component and a q-axis positive-sequence inductor-current component, and a q-axis positive-sequence grid-side voltage component;
determining a q-axis negative-sequence grid-side voltage reference component based on a d-axis negative-sequence inductor-current component and a q-axis negative-sequence inductor-current component and a q-axis negative-sequence grid-side voltage component; and
determining a sum of the q-axis positive-sequence grid-side voltage reference component and the q-axis negative-sequence grid-side voltage reference component as the q-axis grid-side voltage reference value.

7. The method according to claim 1, wherein the converter and the PCC have an identical data acquisition time;
and/or, a length of a data synchronous-acquisition period of the converter and the PCC is identical to a length of a control period of the converter, and a length of a switching period of the grid-side three-phase power module is twice the length of the control period;
and/or, a transmission delay for the three-phase voltage value at the PCC to be transmitted from the PCC to the converter is less than 1ms.

8. The method according to claim 2, further comprising:
in a case that the farm reactive power synchronous control mode is switched to a local reactive power control mode, inputting the grid-side three-phase voltage value of the converter into the phase-locked loop to obtain a second reference phase angle;
based on the second reference phase angle: performing coordinate transformation on the grid-side inductor-current value of the converter to obtain a dq-axis positive and negative sequence inductor-current, and performing coordinate transformation on the grid-side three-phase voltage value to obtain a q-axis positive and negative sequence grid-side voltage;
determining a q-axis inductor-current reference value based on a local reactive power reference value and a reactive power value of the converter;
determining a q-axis grid-side voltage reference value in the local reactive power control mode based on the dq-axis positive and negative sequence inductor-current, the q-axis positive and negative sequence grid-side voltage obtained through the second reference phase angle, and the q-axis inductor-current reference value obtained through the local reactive power reference value; and
generating a PWM signal for controlling the grid-side three-phase power module based on the q-axis grid-side voltage reference value in the local reactive power control mode and the second reference phase angle.

9. The method according to claim 8, further comprising: determining a difference between a target set value of a grid-side line-voltage effective value of the converter and an actual value of the grid-side line-voltage effective value, and inputting the difference into a second PI controller to obtain the local reactive power reference value,
wherein the determining a q-axis inductor-current reference value based on a local reactive power reference value and a reactive power value of the converter comprises:
inputting a difference between the local reactive power reference value and the reactive power value of the converter into a third PI controller; and
determining the q-axis inductor-current reference value based on a d-axis positive-sequence grid-side voltage component, an output value of the third PI controller, a grid-voltage angular frequency, and a grid-side filter capacitance value of the converter,
wherein the d-axis positive-sequence grid-side voltage component is obtained by performing coordinate transformation on the grid-side three-phase voltage value of the converter based on the second reference phase angle.

10. The method according to claim 1, wherein the converter and the PCC have an identical data acquisition time,
wherein the determining a first reference phase angle based on the phase-locked angle comprises: performing compensation processing on the phase-locked angle based on a transmission delay of the three-phase voltage value at the PCC and a phase angle difference between a high-voltage side and a low-voltage side of a transformer to obtain the first reference phase angle,
wherein the converter is connected to the PCC via the transformer; and
wherein the transmission delay is a transmission delay for the three-phase voltage value at the PCC to be transmitted from the PCC to the converter.

11. The method according to claim 10, wherein the performing compensation processing on the phase-locked angle based on a transmission delay of the three-phase voltage value at the PCC and a phase angle difference between a high-voltage side and a low-voltage side of a transformer to obtain the first reference phase angle comprises:
determining a sum of the phase-locked angle, a first compensation angle for compensating the phase angle difference between the high-voltage side and the low-voltage side of the transformer, and a second compensation angle for compensating the transmission delay as the first reference phase angle.

12. The method according to any one of claims 1 and 10 to 11, wherein a system short-circuit ratio (SCR) of a grid connected to the new energy power generation system via the PCC is within a predetermined range.

13. The method according to claim 1, wherein the determining a d-axis grid-side voltage reference value and a q-axis grid-side voltage reference value based on the dq-axis positive and negative sequence inductor-current and the dq-axis positive and negative sequence grid-side voltage comprises:
determining a d-axis inductor-current reference value based on a direct current (DC) voltage target set value and a collected DC voltage value of the converter, and a q-axis positive-sequence grid-side voltage component;
determining a q-axis inductor-current reference value based on a target set value of a grid-side line-voltage effective value and a collected effective value of the grid-side line-voltage of the converter, a reactive power value of the converter, and a d-axis positive-sequence grid-side voltage component; and
determining the d-axis grid-side voltage reference value and the q-axis grid-side voltage reference value based on the d-axis inductor-current reference value, the q-axis inductor-current reference value, the da-axis positive and negative sequence inductor-current, and the dq-axis positive and negative sequence grid-side voltage.

14. The method according to claim 13, wherein the determining the d-axis grid-side voltage reference value and the q-axis grid-side voltage reference value based on the d-axis inductor-current reference value, the q-axis inductor-current reference value, the dq-axis positive and negative sequence inductor-current, and the dq-axis positive and negative sequence grid-side voltage comprises:
determining a d-axis positive-sequence grid-side voltage reference component based on the d-axis inductor-current reference value, a d-axis positive-sequence inductor-current component, a q-axis positive-sequence inductor-current component, and a d-axis positive-sequence grid-side voltage component;
determining a q-axis positive-sequence grid-side voltage reference component based on the q-axis inductor-current reference value, the d-axis positive-sequence inductor-current component, the q-axis positive-sequence inductor-current component, and a q-axis positive-sequence grid-side voltage component;
determining a d-axis negative-sequence grid-side voltage reference component based on a d-axis negative-sequence inductor-current component, a q-axis negative-sequence inductor-current component, and a d-axis negative-sequence grid-side voltage component;
determining a q-axis negative-sequence grid-side voltage reference component based on the d-axis negative-sequence inductor-current component, a q-axis negative-sequence inductor-current component and a q-axis negative-sequence grid-side voltage component; and
determining the d-axis grid-side voltage reference value and the q-axis grid-side voltage reference value based on the d-axis positive-sequence grid-side voltage reference component, the q-axis positive-sequence grid-side voltage reference component, the d-axis negative-sequence grid-side voltage reference component, and the q-axis negative-sequence grid-side voltage reference component.

15. A computer-readable storage medium storing a computer program, wherein the computer program, when executed by a processor, causes the processor to perform the method for controlling a converter of a new energy power generation system according to any one of claims 1 to 14.

16. A converter controller for a new energy power generation system, wherein the converter controller comprises:
a processor; and
a memory storing a computer program, wherein the computer program, when executed by the processor, causes the processor to perform the method for controlling a converter of a new energy power generation system according to any one of claims 1 to 14.

17. A new energy power generation system, comprising a converter and the converter controller according to claim 16.
